Europäisches Patentamt

European Patent Office

Office européen des brevets

(19)

(11) Veröffentlichungsnummer: **0 100 473**

**A2**

(12) **EUROPÄISCHE PATENTANMELDUNG**

(21) Anmeldenummer: 83106905.9

(22) Anmeldetag: 14.07.83

(51) Int. Cl.³: **H 02 G 15/10**
**H 02 G 1/14**

(30) Priorität: 09.08.82 DE 3229619

(43) Veröffentlichungstag der Anmeldung:
15.02.84 Patentblatt 84/7

(84) Benannte Vertragsstaaten:
AT BE CH DE FR GB IT LI NL SE

(71) Anmelder: BASF Farben + Fasern Aktiengesellschaft
Am Neumarkt 30
D-2000 Hamburg 70(DE)

(72) Erfinder: Hegemann, Günther, Dr. Dipl.-Chem.
Andreasstrasse 23
D-2000 Hamburg 60(DE)

(74) Vertreter: Habbel, Hans-Georg, Dipl.-Ing.
Postfach 3429 Am Kanonengraben 11
D-4400 Münster(DE)

(54) Verfahren zum Vergiessen einer Kabelverbindung und Bausatz zur Durchführung des Verfahrens.

(57) Die Erfindung betrifft ein Verfahren zum Vergießen einer in einer Kabelmuffe angeordneten Kabelverbindung durch Ausfüllen des freien Raumes der Kabelmuffe mit einer dauerplastischen Masse. Zur Durchführung des Verfahrens wird eine Einfüllöffnung der Kabelmuffe mit der Austrittsöffnung einer Kartusche verbunden. Aus der Kartusche wird eine dauerplastische Masse, die ohne Einwirkung von Druck und/oder Scherkräften nicht fließfähig ist, in die Kabelmuffe eingepreßt. Die Erfindung betrifft auch einen Bausatz zur Durchführung des Verfahrens, bestehend aus einer Kabelmuffe und einer Kartusche.

Fig. 1

EP 0 100 473 A2

PAT 82 863
09.07.82

BASF Farben + Fasern AG, Hamburg

Verfahren zum Vergießen einer Kabelverbindung und Bausatz zur Durchführung des Verfahrens

Die Erfindung betrifft ein Verfahren zum Vergießen einer in einer Kabelmuffe angeordneten Kabelverbindung durch Ausfüllen des freien Raumes der Kabelmuffe mit einer dauerplastischen Masse und einen Bausatz zur Durchführung des Verfahrens.

Kabelmuffen werden bei Verbindungen und Abzweigungen von elektrischen Kabeln eingesetzt. Zur Erzielung eines mechanischen Schutzes und zur elektrischen Isolierung der in der Kabelmuffe offenliegenden Kabel und Klemmen sowie zur Verhinderung des Eindringens von Feuchtigkeit wird der freie Raum innerhalb der Kabelmuffe vergossen, d.h. mit geeigneten Materialien ausgefüllt. In der Vergangenheit wurde hierzu vielfach Bitumen verwendet, das in geschmolzenem Zustand in die fertig montierte Muffe eingefüllt wurde. Weiterhin ist es bekannt, insbesondere duroplastisch aushärtende Systeme auf der Basis von Epoxid-, Polyurethan- und ungesättigten Polyesterharzen sowie Acrylatsysteme zu verwenden. Diese Materialien haben den Vorteil, im flüssigen, meist niedrig-viskosen Zustand in die Kabelmuffe eingefüllt werden zu können, wo sie nach mehr oder weniger langer Zeit unter Vernetzung aushärten. Sie weisen jedoch den Nachteil auf, daß es sich um Mehrkomponenten-Systeme handelt, deren Einzelkomponenten getrennt aufbewahrt und vor dem Verarbeiten

intensiv gemischt werden müssen. Hierbei tritt das Problem auf, daß die Topfzeit zur Erzielung brauchbarer Aushärtungszeiten auch bei niedrigen Temperaturen begrenzt ist. Außerdem ist ein späteres Öffnen der Kabelverbindung, z.B. zu Reparaturzwecken nur unter Verlust der gesamten Kabelmuffe einschließlich eines mehr oder weniger langen Kabelstückes möglich.

Es ist weiterhin bekannt, zur Vermeidung der geschilderten Probleme, dauerplastische Massen als Vergußmassen zu verwenden. Diese müssen eine Viskosität besitzen, die ein Gießen bei Umgebungstemperatur noch zuläßt. Deshalb müssen die Kabelmuffen besonders dicht schließen, um ein Herauslaufen des Materials dauerhaft zu verhindern.

Es ist Aufgabe der vorliegenden Erfindung, die geschilderten Nachteile des Standes der Technik zu vermeiden und ein Verfahren zum Vergießen von Kabelmuffen anzugeben, bei dem einerseits kein Schmelzen des Vergußmaterials erforderlich ist und andererseits kein Aushärten des Gußmaterials eintritt. Weiterhin soll auch bei geringfügigen Undichtigkeiten der Kabelmuffe ein Austreten des Vergußmaterials dauerhaft verhindert werden.

Überraschenderweise wurde nun gefunden, daß diese Aufgabe durch die Verwendung extrem hochviskoser, insbesondere strukturviskoser, dauerplastischer Massen gelöst werden kann. Derartige Materialien sind an sich bekannt, sie wurden jedoch bisher als für den in Rede stehenden Verwendungszweck ungeeignet angesehen, da sie nicht mehr im Gießverfahren in eine Kabelmuffe eingefüllt werden können.

Gegenstand der Erfindung ist also ein Verfahren der eingangs genannten Art, das dadurch gekennzeichnet ist, daß eine Einfüllöffnung der Kabelmuffe mit der Austrittsöffnung einer Kartusche verbunden wird und aus der Kartusche eine dauerplastische Masse, die ohne Einwirkung von Druck und/oder Scherkräften nicht fließfähig ist, in die Kabelmuffe eingepreßt wird.

Vorteilhaft werden für das erfindungsgemäße Verfahren beispielsweise Kohlenwasserstoffharze, chlorierte Parafine oder Polyisobutylen verwendet, die mit mineralischen Füllstoffen hoch gefüllt sind. Die Massen können z.B. Kieselsäure, Quarzmehl, Aluminiumhydroxid oder Mikrodolomit in einem Anteil von 40-70 Gewichtsprozent, bezogen auf die Gesamtmasse, enthalten. Durch diese Füllstoffe erhalten die Massen eine hohe Strukturviskosität. Bei Einwirkung von Scherkräften sinkt vorübergehend die Viskosität, so daß ein Einfüllen in die Kabelmuffen möglich wird. Nach dem Einfüllen steigt die Viskosität wieder, und daher wird ein Austreten des Materials durch ggf. vorhandene Undichtigkeiten zuverlässig verhindert.

Zum Einfüllen der Materialien können zylinderförmige Kartuschen, beispielsweise aus Kunststoff, verwendet werden, die mit einem beweglichen Stempel versehen sind. Nach dem Verbinden der Austrittsöffnung der Kartusche mit der Einfüllöffnung der Kabelmuffe wird beispielsweise mittels bekannter Werkzeuge auf mechanischer, hydraulischer oder pneumatischer Basis auf den beweglichen Stempel der Kartusche Druck ausgeübt, der die dauerplastische Masse in die Kabelmuffe treibt. Hierbei tritt die erforderliche hohe Scherkraft auf, durch die die Strukturviskosität der Vergußmasse, soweit diese gegeben ist, abgebaut wird. Nach dem Einfüllen der Masse wird die Einfüllöffnung der Kabelmuffe verschlossen. Die Kabelverbindung ist dann betriebsbereit.

Gegenstand der Erfindung ist auch ein Bausatz zur Durchführung des erfindungsgemäßen Verfahrens, der durch eine Kabelmuffe und eine Kartusche gekennzeichnet ist, wobei die Kabelmuffe eine mit der Austrittsöffnung der Kar-

4

tusche verbindbare Einfüllöffnung aufweist.

Vorteilhaft sind die Einfüllöffnung der Kabelmuffe und die Austrittsöffnung der Kartusche über Gewinde miteinander verschraubbar. Hierdurch wird eine schnelle Verbindung der Kabelmuffe und der Kartusche ermöglicht und ein seitliches Austreten der Vergußmasse wird verhindert.

Bei einer anderen vorteilhaften Ausgestaltung der Erfindung sind die Einfüllöffnung der Kabelmuffe und die Austrittsöffnung der Kartusche über eine Flanschverbindung miteinander verbindbar.

Um ein leichtes Einfüllen der Vergußmasse auch bei ungünstigen räumlichen Verhältnissen, beispielsweise in engen Kabelschächten, zu ermöglichen, sind die Einfüllöffnung der Kabelmuffe und die Austrittsöffnung der Kartusche vorteilhaft über eine flexible Leitung miteinander verbunden. Als flexible Leitung können ein druckfester Schlauch oder ein flexibles Metall- oder Kunststoffrohr dienen.

Grundsätzlich kann die beim Einfüllen verdrängte Luft durch geringfügige Undichtigkeiten der Kabelmuffe entweichen. Vorteilhaft weist jedoch die Kabelmuffe auf ihrer Oberseite, insbesonderer an ihrer höchsten Stelle, eine Entlüftungsöffnung auf. Diese Entlüftungsöffnung zeigt weiterhin durch austretende Vergußmasse an, daß die Kabelmuffe vollständig gefüllt ist. Die Entlüftungsöffnung wird nach dem Vergießen ebenfalls verschlossen.

Zur Erzielung einer vollständigen Füllung und zur Vermeidung von Luftkammern ist die Einfüllöffnung vorteilhaft auf der Unterseite der Kabelmuffe angeordnet.

Die Kartusche ist vorteilhaft mit einer dauerplastischen Masse gefüllt, die ohne Einwirkung von Druck und/oder Scherkräften nicht fließfähig ist. Hierzu sind die obengenannten Massen besonders geeignet.

Um den Einfüllvorgang beobachten zu können, besteht die Kabelmuffe vorteilhaft mindestens teilweise aus transparentem oder durchsichtigem Material.

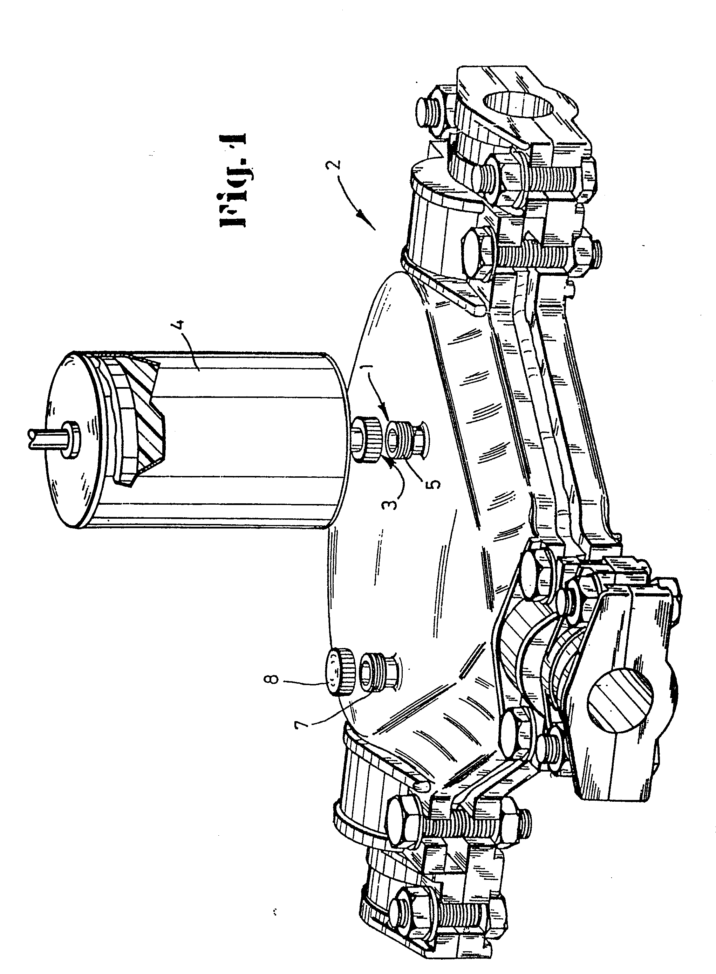

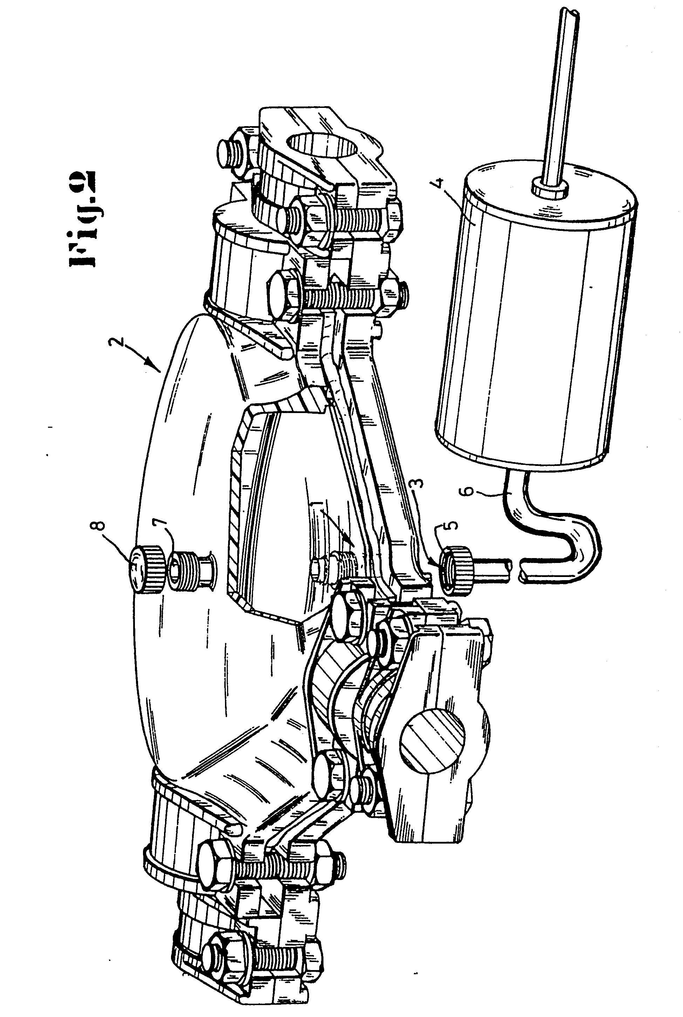

Im folgenden werden Ausführungsbeispiele der Erfindung anhand der Zeichnung näher erläutert. Figur 1 und 2 zeigen zwei unterschiedliche Ausführungsformen des aus einer Kabelmuffe und einer Kartusche bestehenden Bausatzes.

Der Bausatz besteht aus einer Kabelmuffe (2) und einer Kartusche (4). Die Kabelmuffe 2 weist eine Einfüllöffnung (1) und eine Entlüftungsöffnung (7) auf. Die Austrittsöffnung (3) der Kartusche (4) und die Einfüllöffnung (1) sind durch Gewinde (5) miteinander verschraubbar. Nach dem Einfüllen der in der Kartusche (4) befindlichen dauerplastischen Masse in die Kabelmuffe (2) werden die Einfüllöffnung (1) und die Entlüftungsöffnung (7) durch Verschlußkappen (8) verschlossen.

Bei der Ausführung gemäß Figur 2 ist die Einfüllöffnung (1) auf der Unterseite der Kabelmuffe (2) angeordnet. Die Kartusche (4) und die Kabelmuffe (2) werden in diesem Fall durch eine flexible Leitung (6) miteinander verbunden.

Patentansprüche:

1. Verfahren zum Vergießen einer in einer Kabelmuffe angeordneten Kabelverbindung durch Ausfüllen des freien Raumes des Kabelmuffe mit einer dauerplastischen Masse, dadurch gekennzeichnet, daß eine Einfüllöffnung (1) der Kabelmuffe (2) mit der Austrittsöffnung (3) einer Kartusche (4) verbunden wird und aus der Kartusche eine dauerplastische Masse, die ohne Einwirkung von Druck und/oder Scherkräften nicht fließfähig ist, in die Kabelmuffe eingepreßt wird.

2. Bausatz zur Durchführung des Verfahrens nach Anspruch 1, gekennzeichnet durch eine Kabelmuffe (2) und eine Kartusche (4), wobei die Kabelmuffe eine mit der Austrittsöffnung (3) der Kartusche (4) verbindbare Einfüllöffnung (1) aufweist.

3. Bausatz nach Anspruch 2, dadurch gekennzeichnet, daß die Einfüllöffnung (1) der Kabelmuffe (2) und die Austrittsöffnung (3) der Kartusche (4) über Gewinde (5) miteinander verschraubbar sind.

4. Bausatz nach Anspruch 2, dadurch gekennzeichnet, daß die Einfüllöffnung (1) der Kabelmuffe (2) und die Austrittsöffnung (3) der Kartusche (4) über eine Flanschverbindung miteinander verbindbar sind.

5. Bausatz nach Anspruch 2-4, dadurch gekennzeichnet, daß die Einfüllöffnung (1) der Kabelmuffe (2) und die Austrittsöffnung (3) der Kartusche (4) über eine flexible Leitung (6) miteinander verbindbar sind.

6. Bausatz nach Anspruch 2-5, dadurch gekennzeichnet, daß die Kabelmuffe (2) auf ihrer Oberseite eine Entlüftungsöffnung (7) aufweist.

7. Bausatz nach Anspruch 2-6, dadurch gekennzeichnet, daß die Einfüllöffnung (1) auf der Unterseite der Kabelmuffe (2) angeordnet ist.

8. Bausatz nach Anspruch 2-7, dadurch gekennzeichnet, daß die Kartusche (4) mit einer dauerplastischen Masse gefüllt ist, die ohne Einwirkung von Druck und/oder Scherkräften nicht fließfähig ist.

9. Bausatz nach Anspruch 2-8, dadurch gekennzeichnet, daß die Kabelmuffe (2) mindestens teilweise aus transparentem oder durchsichtigem Material besteht.

0100473

Fig.1

Fig.2